# EUROPÄISCHE PATENTSCHRIFT

(11) **EP 0 827 381 B1**
(45) Veröffentlichungstag und Bekanntmachung des Hinweises auf die Patenterteilung: **13.01.1999**
(21) Anmeldenummer: 96919802.7
(22) Anmeldetag: 23.05.1996
(51) Int. Cl.: A47L 1/08

(54) **WISCHKISSEN**
WIPER CUSHION
COUSSINET ESSUYEUR

(30) Priorität: 23.05.1995 DE 29508348 U
(43) Veröffentlichungstag der Anmeldung: 11.03.1998
(73) Patentinhaber: Lersch, Ulrich, 46395 Bocholt (DE); Kohlruss, Gregor, 46395 Bocholt (DE); Wiesner, Hubert, 46395 Bocholt (DE); Griebe, Oliver, 46395 Bocholt (DE)
(72) Erfinder: Lersch, Ulrich, 46395 Bocholt (DE); Kohlruss, Gregor, 46395 Bocholt (DE); Wiesner, Hubert, 46395 Bocholt (DE); Griebe, Oliver, 46395 Bocholt (DE)
(74) Vertreter: Behrendt, Arne, Dipl.-Ing.
(86) Internationale Anmeldenummer: EP9602225
(87) Internationale Veröffentlichungsnummer: WO9637141

(56) Entgegenhaltungen:
- BE-A- 760 180
- GB-A- 813 668
- GB-A- 1 160 995
- US-A- 2 707 292
- US-A- 3 603 692
- US-A- 3 698 824
- US-A- 5 299 876

## Beschreibung

Die Erfindung betrifft ein bei Andruck verformbares Wischkissen für das Abwischen von beschlagenen und/oder verschmutzten, insbesondere glatten Oberflächen, wie beispielsweise der Innenseiten von Autoscheiben,
- mit einem beutelförmigen Reinigungsbezug, der beim Wischen mit einer Außenseite die zu reinigende Oberfläche kontaktiert,
- und mit einer Kissenfüllung, die vom Reinigungsbezug umhüllt ist und diesen im Inneren auspolstert.

Derartige Reinigungskissen werden im Autozubehörhandel angeboten und haben eine weite Verbreitung gefunden. Bei den vorgenannten Wischkissen ist es vorteilhaft, daß die Oberfläche des Reinigungsbezuges eine relativ hohe Wassermenge aufnimmt, was insbesondere bei beschlagenen Scheiben von großem Vorteil ist. Die Wischkissen können auch mit einer Substanz getränkt sein, die das Wiederbeschlagen der Scheiben verhindert.

Document US-A-3603692 offenbart ein verformbares Wischkissen, das mit einem tubulären Handgriff verbunden ist, der als Sprühgerät, Behälter und Sprühkopf ausgebildet ist.

Die Verschmutzung der Innenseite von Autoscheiben und anderen Flächen rührt vor allen Dingen von feinsten, haftenden Staubteilchen her, wie beispielsweise Rauchteilchen von Zigaretten, durch die Ventilation in das Innere des Autos geschafften Straßenstaub und Bekleidungsabrieb bestehen. Dieser Staub wird zwar mit dem eventuell vorhandenen Beschlagwasser zum Teil fortgewischt; bei trockenen Scheiben besteht aber der Nachteil, daß der Belag sehr schwer abwischbar ist.

Es stellt sich die Aufgabe, die Wischeigenschaften des vorgenannten Wischkissens dadurch zu verbessern, daß es bei gleicher einfacher Bedienbarkeit einen wesentlich höheren Wischeffekt, auch bei trockenen Scheiben, hervorzurufen vermag.

Diese Aufgabe wird erfüllt bei einem Wischkissen der eingangs genannten Art, in dem in das Innere des Wischkissens anstelle eines Teils der Kissenfüllung ein Behälter eingelassen ist, der einen Vorratsteil und einen verschließbaren Hals aufweist, in den ein mechanisch bedienbarer Sprühkopf eingebaut ist, dessen Düse außerhalb des Bezuges angeordnet ist. Der Behälter wird mit Wasser oder einer Wasser-Tensid-Lösung, einer Wasser-Alkohol-Lösung einer gegebenenfalls auch mit einer wasserfreien Reinigungslösung gefüllt, die dann mithilfe der Sprühdüse direkt auf die Scheibe aufgesprüht werden kann. Es ist demnach nicht erforderlich, daß im Auto sowohl eine Vorratsflasche mit einem Glasreinigungsmittel und ein Wischkissen aufbewahrt werden, sondern es reicht lediglich, das erfindungsgemäße Fläschchen im Wischkissen von Zeit zu Zeit wieder aufzufüllen.

Als Autozubehör eignet sich insbesondere das vorgenannte Wischkissen dadurch, daß es konstruktiv geeignet ist, eine Einhandbedienung zuzulassen. Vorzugsweise ist der Sprühkopf so angeordnet, daß er seitlich aus dem Bezug des Wischkissen herausragt und bei von einer Hand gehaltenen Wischkissen mit einem Finger bedienbar ist.

Aus technischen und ökologischen Gründen sollte der Sprühkopf als Pumpventil gestaltet sein. Es soll aber nicht ausgeschlossen sein, daß möglicherweise auch ein Druckgas verwendet wird, mit dem bei Bedienung des Sprühkopfes die Reinigungsflüssigkeit aus der Sprühdüse herausgetrieben wird.

In diesem Zusammenhang ist es auch vorteilhaft, wenn der Sprühkopf von dem Behälter abnehmbar und/oder auswechselbar ist, so daß der Behälter sehr leicht wiederbefüllt werden und eine lange Gebrauchsdauer garantiert werden kann.

Als Behälter eignet sich vorzugsweise eine aus Kunststoff, z.B. Polyethylen, hergestellt, vorzugsweise quaderförmige oder ovoide Flasche.

Das Wischkissen sollte vorzugsweise die an sich bekannte Wischkissenform haben, wie sie auf dem Markt ist. Von dieser Form könnte aber auch abgewichen werden, indem beispielsweise ein rundes, linsenförmiges Kissen gestaltet wird, das mit einem entsprechenden Behälter versehen ist.

Das Material des Bezuges sollte in einer für den Fachmann an sich bekannten Weise daraufhin ausgewählt werden, daß es mit der Reinigungsflüssigkeit kompatibel und stark schmutzaufnehmend ist, ohne daß es sofort selbst gewaschen oder ausgewechselt werden muß. Hierzu eignen sich vorzugsweise Vliesstoffe, die auf Polyamid- oder Polyurethan-Basis hergestellt sind. Auch andere Vliesstoffe (non-woven) sind geeignet.

Außerdem haben sich als geeignet erwiesen Bezüge, die wenigstens auf einer Wischseite aus einem Velours- oder Frottiergewebe oder -gewirke bestehen. Auch Textilstoffe (Vliese, Gewebe, Gewirke), die aus einer Mikrofaser hergestellt sind, eignen sich dazu, wenigstens auf einer Wischseite des Bezuges verwendet zu werden. Unter Mikrofasern werden Chemiefasern aus dem Bereich der Feinstfasern verstanden, insbesondere feinst ausgesponnene Chemiefasern auf der Basis Polyamid oder Polyester mit außergewöhnlich feinem Einzeltiter. Diese können sowohl zu Vliesstoffen als auch zu Textilstoffen oder -geweben verarbeitet werden.

Insbesondere wird vorgeschlagen, die beiden Seiten des Kissens aus verschiedenen Materialien herzustellen, beispielsweise eine aus Frottiergewebe bestehende Seite zur Vorreinigung und eine aus Vliesstoff hergestellte Seite zum Nach- und Endreinigen.

Wesentlich ist bei der Auswahl der Materialien für den Bezugsstoff und den Polsterstoff, daß diese nach Entnahme der Flasche waschbar sind. Als Polsterstoff eignen sich daher beispielsweise Schaumstoffe auf Polyethylen-, PVC- oder PUR-Basis.

In einer vorteilhaften Ausführungsform des erfindungsgemäßen Wischkissens weist der Bezug einen Verschluß auf und ist auswechselbar. Ist der Reinigungsbezug verschmutzt oder stark abgenutzt, so kann er abgenommen und durch einen neuen Bezug ersetzt werden, während Behälter und Kissenfüllung weiterverwendet werden. Der verschmutzte Bezug kann dann einzeln gewaschen und erneut auf die Kissenfüllung aufgezogen werden. Darüber hinaus können für unterschiedliche Reinigungsaufgaben verschiedene Reinigungsbezüge vorrätig gehalten werden, die bei Bedarf eingesetzt werden.

Der Verschluß kann beispielsweise als Reißverschluß ausgebildet sein.

In einer bevorzugten Ausführungsform der Erfindung ist der Verschluß als Flächenreißverschluß ausgebildet, was ein schnelles und unkompliziertes Auswechseln des Bezuges ermöglicht.

Der Anteil, den der Behälter gegenüber der Polsterung des Bezuges einnimmt, kann variabel sein. Es erscheint aber wesentlich, daß eine noch ausreichende Verformbarkeit des Wischkissens gegenüber der meist planen, glatten Oberfläche möglich ist. Die Festlegung des Verhältnisses von Behälterzu Füllungsvolumen hängt ab von der Elastizität und Zusammendrückbarkeit der Polsterung und der Flasche, von der Größe des Kissens insgesamt und auch von den Materialeigenschaften des Bezuges ab. Es soll also nicht ausgeschlossen werden, daß der Behälter im wesentlichen das gesamte Innere des Bezuges einnimmt, wenn beispielsweise der Bezug sehr flauschig und nachgiebig ist, so daß er die Eigenschaften der Polsterung mit übernimmt.

Ein Ausführungsbeispiel der Erfindung ist in der Zeichnung dargestellt. Die Figuren der Zeichnung zeigen:
- Fig. 1: in perspektivischer Ansicht ein Wischkissen etwa in natürlicher Größe;
- Fig. 2: das Wischkissen gemäß Figur 1 im Schnitt, jedoch unter Fortlassung des Sprühkopfes;
- Fig. 3: eine Ausführungsform des erfindungsgemäßen Wischkissens, bei der der Reinigungsbezug einen Verschluß aufweist und auswechselbar ist.

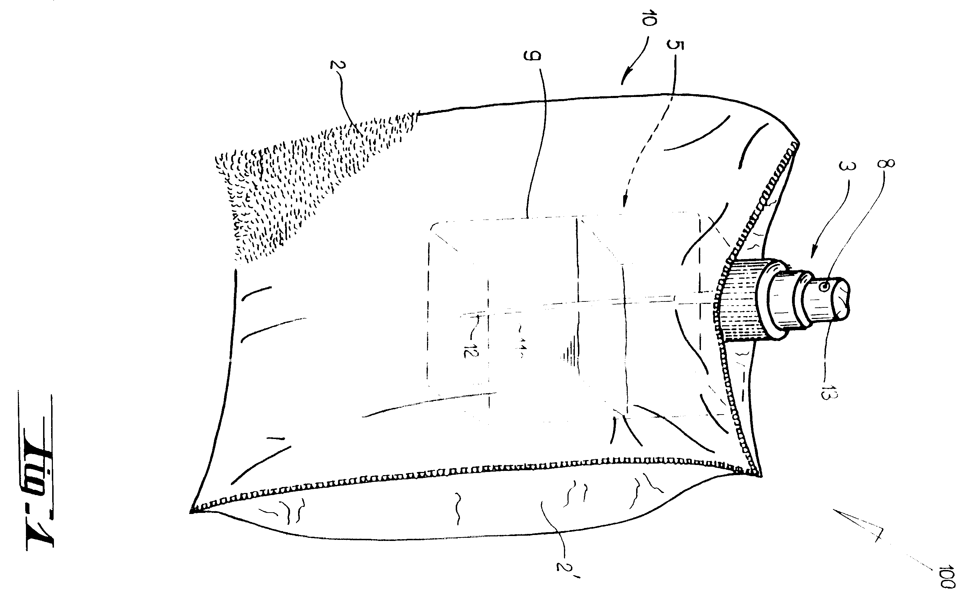

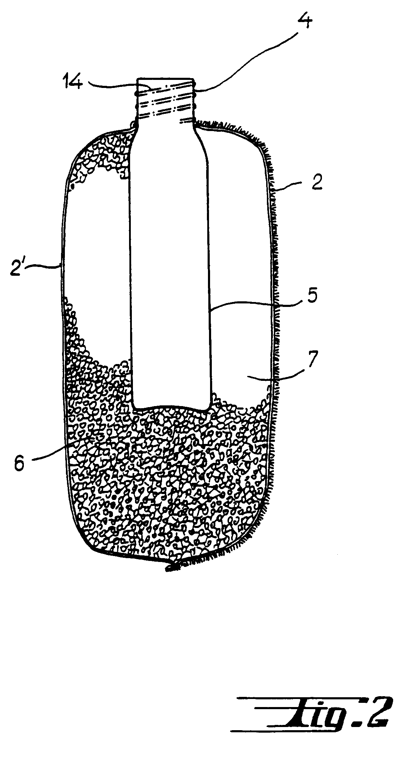

In den Figuren 1 und 2 ist ein bei Andruck verformbares Wischkissen 100 für das Abwischen von beschlagenen und/oder verschmutzten Innenseiten von Autoscheiben (nicht gezeichnet) oder anderen entsprechenden Flächen dargestellt, wobei in Fig. 1 die Größe etwa der natürlichen Größe entspricht. Es sei aber nicht ausgeschlossen, daß die Wischkissen auch größer oder kleiner sind, gegebenenfalls auch eine andere Form haben, beispielsweise eine runde Linsenform.

Das Wischkissen weist einen beutelförmigen Reinigungsbezug 10 auf, der beim Wischen mit einer Außenseite 2 oder 2' die zu reinigende Oberfläche kontaktiert. Das Kissen ist zur Polsterung mit einer Kissenfüllung 6 versehen, die beispielsweise aus weichem Schaumstoff, Kunstschaumschnitzeln oder dergleichen besteht, die das Innere 7 im wesentlichen auspolstern.

Weiterhin nimmt einen Teil des Inneren ein Behälter 5 ein, der einen etwa quaderförmigen Vorratsteil 9 und einen sich daran anschließenden, verschließbaren Hals 4 aufweist. Der Behälter stellt also eine aus Kunststoff bestehende, im wesentlichen nicht komprimierbare Flasche dar, die im vorliegenden Falle etwa 100 bis 250 ml einer Reinigungsflüssigkeit, Bezugszahl 11, aufnimmt. Die Reinigungsflüssigkeit wird innerhalb des Behälters mit einem hohlen Tubus 12 zu einem auf den Hals 4 aufgeschraubten Sprühkopf 3 gefördert, der als an sich bekannter Ventilsprühkopf gestaltet ist, wobei der Ventilkopf 13 das Ventil betätigt und auch eine Sprühdüse 8 enthält. Die Sprühdüse 8 sprüht die Reinigungsflüssigkeit 11 seitlich heraus, wie aus Fig. 1 erkennbar ist. Dabei ist hervorzuheben, daß der Sprühkopf bei von einer Hand gehaltenem Wischkissen mit einem Finger bedienbar ist (nicht dargestellt).

Der Sprühkopf kann, wie an der Darstellung des Halses in Figur 2 zu sehen ist, über ein Gewinde 14 abgeschraubt werden, mit anderen Worten, er ist abnehmbar und auswechselbar mit dem Behälter 5 verbunden. Zusätzlich kann auch noch eine Schutzkappe vorgesehen werden (nicht dargestellt), wie dies für Sprühköpfe in der dargestellten Art bekannt ist.

Wesentlich ist weiterhin, daß die Materialien des Bezuges entsprechend den verbesserten Wischeigenschaften der ständigen Verfügbarkeit einer Reinigungsflüssigkeit ausgewählt sind. Dabei wird vorgeschlagen, die eine Außenseite, Wischseite 2', aus einem auf Polyamid-Basis hergestellten Vliesstoff herzustellen, während die gegenüberliegende Seite, Wischseite 2, aus einem schmutzaufnehmenden Frottiergewebe oder -gewirke besteht. Hier können auch Veloursstoffe, beflockte Stoffe oder dergleichen verwendet werden. Es ist auch möglich, den Bezug auf wenigstens einer Wischseite aus einem aus Mikrofasern hergestellten Textilstoff herzustellen, wie eingangs bereits erwähnt.

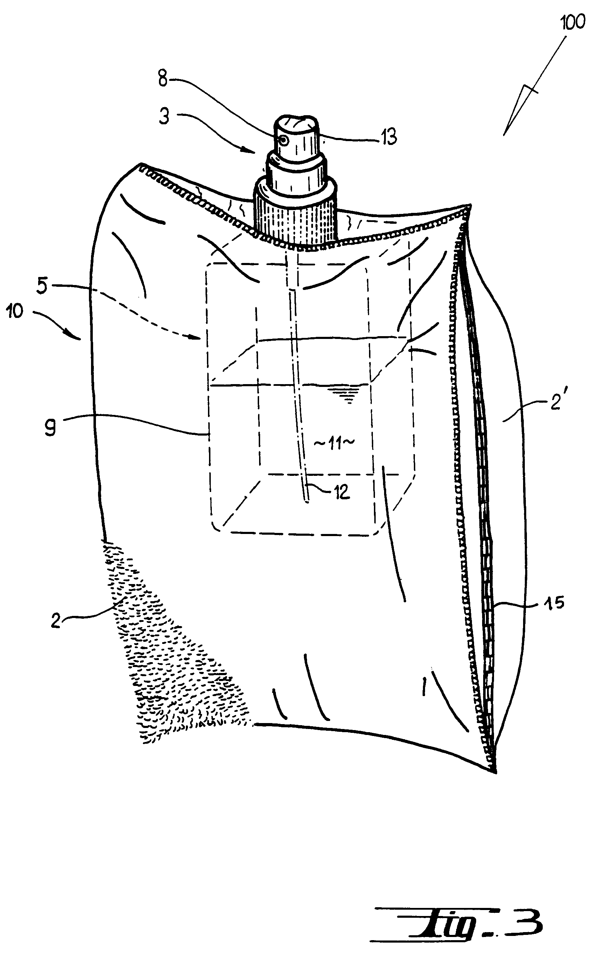

In Figur 3 wird eine besonders vorteilhafte Ausführungsform des erfindungsgemäßen Wischkissens dargestellt. In dieser Ausführungsform der Erfindung weist der Reinigungsbezug 10 einen Verschluß 15 auf; vorzugsweise ist der Verschluß 15 als Reißverschluß oder als Flächenreißverschluß ausgebildet. Besonders vorteilhaft ist der Einsatz eines Klettverschlusses, beispielsweise als aufgenähtes Band.

Ist der Reinigungsbezug 10 abgenutzt und dadurch in seiner Reinigungswirkung vermindert oder ist ein Auswechseln des Bezuges 10 wegen Verschmutzung erforderlich, so kann dieser abgenommen werden, indem der Verschluß 15 geöffnet und die Kissenfüllung 6 zusammen mit dem Behälter 5 herausgenommen wird. In dem in Fig. 3 dargestellten Ausführungsbeispiel ist der Verschluß 15 an einer der Seiten des Bezuges 10 vorgesehen; es ist ebenfalls möglich zwei Seiten mit einem Verschluß zu versehen, wodurch das Herausnehmen der Kissenfüllung erleichtert wird. Wird der Verschluß 15 an der Seite des Bezuges 10 angeordnet, an der der Behälter 5 eingelassen ist, so kann dieser abgenommen oder ausgetauscht werden, ohne die Kissenfüllung 6 aus dem Bezug 10 herauszunehmen.

Insgesamt ergibt damit das Wischkissen eine für den eingangs genannten Gebrauchszweck verblüffend nützliche Lösung.

## Patentansprüche

1. Bei Andruck verformbares Wischkissen (100) für das Abwischen von beschlagenen und/oder verschmutzten glatten Oberflächen, insbesondere der Innenseite von Autoscheiben,
• mit einem beutelförmigen Reinigungsbezug (10), der beim Wischen mit einer Außenseite die zu reinigende Oberfläche kontaktiert,
• und mit einer Kissenfüllung (6), die vom Reinigungsbezug umhüllt ist und diesen im Inneren (7) auspolstert,
**dadurch gekennzeichnet,**
daß in das Innere des Wischkissens anstelle eines Teils der Kissenfüllung (6) ein Behälter (5) eingelassen ist, der einen Vorratsteil (9) und einen verschließbaren Hals (4) aufweist, und daß in den Hals ein mechanisch bedienbarer Sprühkopf (3) eingebaut ist, dessen Sprühdüse (8) außerhalb des Bezuges angeordnet ist.

2. Wischkissen nach Anspruch 1, dadurch gekennzeichnet, daß der Sprühkopf (3) seitlich aus dem Bezug (10) des Wischkissens (100) herausragt und bei von einer Hand gehaltenem Wischkissen mit einem Finger bedienbar ist.

3. Wischkissen nach Anspruch 1 oder 2, dadurch gekennzeichnet, daß der Sprühkopf (3) von dem Behälter abnehmbar und/oder auswechselbar ist.

4. Wischkissen nach Anspruch 1 bis 3, dadurch gekennzeichnet, daß der Behälter (5) eine aus Kunststoff hergestellte, vorzugsweise quaderförmige oder ovoide Flasche ist.

5. Wischkissen nach einem der vorhergehenden Ansprüche, dadurch gekennzeichnet, daß es im wesentlichen quaderförmig oder linsenförmig ist.

6. Wischkissen nach einem der vorhergehenden Ansprüche, dadurch gekennzeichnet, daß der Bezug (10) wenigstens auf einer Wischseite (2; 2') aus einem auf Polyamidbasis hergestellten Vliesstoff besteht.

7. Wischkissen nach einem der vorhergehenden Ansprüche, dadurch gekennzeichnet, daß der Bezug (10) wenigstens auf einer Wischseite (2; 2') aus einem aus Velours- oder Frottiergewebe oder -gewirke besteht.

8. Wischkissen nach einem der vorhergehenden Ansprüche, dadurch gekennzeichnet, daß der Bezug (10) wenigstens auf einer Wischseite aus einem aus Microfasern hergestellten Textilstoff (Vliesstoff oder Gewebe oder Gewirke) besteht.

9. Wischkissen nach einem der vorhergehenden Ansprüche, dadurch gekennzeichnet, daß der Bezug (10) einen Verschluß aufweist und auswechselbar ist.

10. Wischkissen nach Anspruch 9, dadurch gekennzeichnet, daß der Verschluß ein Reißverschluß ist.

11. Wischkissen nach Anspruch 9, dadurch gekennzeichnet, daß der Verschluß ein Flächenreißverschluß ist.

## Claims

1. A wiper pad (100) which is deformable under contact pressure, for wiping steamed up and/or dirty smooth surfaces, in particular the insides of car windows,
• having a bag-shaped cleaning cover (10), an outer side of which makes contact with the surface for cleaning during wiping,
• and having a pad filling (6) which is encased by the cleaning cover and which stuffs the inside (7) of the cleaning cover,
characterised in that a container (5) is let into the inside of the wiper pad in place of part of the pad filling (6), the container having a storage member (9) and a closable neck (4), and that a mechanically actuable spray head (3) is fitted into the neck, the spray nozzle (8) of which is arranged outside the cover.

2. A wiper pad according to Claim 1, characterised in that the spray head (3) projects laterally out the cover (10) of the wiper pad (100) and can be actuated by a finger when the wiper pad is held in the hand.

3. A wiper pad according to Claim 1 or Claim 2, characterised in that the spray head (3) can be removed from the container and/or replaced.

4. A wiper pad according to Claim 1 to Claim 3, characterised in that the container (5) is a preferably cuboid or ovoid bottle made of plastics material.

5. A wiper pad according to one of the preceding claims, characterised in that it is substantially cuboid or lentiform.

6. A wiper pad according to one of the preceding claims, characterised in that the cover (10), at least one one wiping side (2; 2'), comprises a non-woven fabric produced on a polymide base.

7. A wiper pad according to one of the preceding claims, characterised in that the cover (10), on at least one wiping side (2; 2'), comprises a velour- or terry weave or knit.

8. A wiper pad according to one of the preceding claims, characterised in that the cover (10), on at least one wiping side, comprises a textile material (non-woven fabric or fabric or knitted fabric) made from microfibres.

9. A wiper pad according to one of the preceding claims, characterised in that the cover (10) has a closure and claim be replaced.

10. A wiping pad according to claim 9, characterized in the closure is a zipper.

11. A wiping pad according to claim 9, characterized in the closure is a plane slide fastener.

## Revendications

1. Coussin d'essuyage (100) déformable lors d'une application par pression pour essuyer des surfaces lisses embuées et/ou encrassées, notamment le côté intérieur de vitres automobiles,
avec une housse de nettoyage (10) en forme de sac qui, lors de l'essuyage, vient en contact par un côté extérieur avec le surface à nettoyer,
et avec un remplissage de coussin (6) enveloppe per la housse de nettoyage et qui rembourre celle-ci à l'intérieur (7).
**caractérisé en ce qu'il** est introduit dans l'intérieur du coussin d'essuyage, à la place d'une partie du remplissage du coussin (6) un récipient (5) qui présente une partie de reservoir (9) et un col pouvant être fermé (4) et en ce qu'il est inséré dans le col une tête de pulvérisation (3) actionnable mécaniquemant dont la buse de pulvérisation (8) est disposée à l'extérieur de la housse.

2. Coussin d'essuyage selon la revendication 1, caractérisé en ce que la tête de pulvérisetion (3) dépasse sur le côté de la housse (10) du coussin d'essuyage (100) et, lorsque le coussin d'essuyage est tenu à la main, peut être actionnée avec un doigt.

3. Coussin d'essuyage salon la revendication 1 ou 2, caractérisé en ce que la tête de pulvérisation (3) peut être enlevée du récipient et/ou échangée.

4. Coussin d'essuyage selon la revendication 1 à 3, caractérisé en ce que le récipient (5) est une bouteille fabriquée an matière synthétique, de préférence de forme parallélépipède ou ovoïde.

5. Coussin d'essuyage selon l'une des revendications précédentes, caractérisé en ce qu'il est essentiellement de forme parallélépipède ou lenticulaire.

6. Coussin d'essuyage salon l'une des revendications précédentes, caractérisé en ce que la housse (10) est constituée au moins sur un côté d'essuyage (2; 2') d'une nappe réalisée à base de polyamide.

7. Coussin d'essuyage selon l'une des revendications précédentes, caractérisé en ce que la housse (10) est constituée au moins sur un côté d'essuyage (2; 2') d'un tissu ou tricot de velours ou d'éponge.

8. Coussin d'essuyage selon l'une des revendications précédentes, caractérisé en ce que la housse (10) est constituée au moins sur un côté d'essuyage d'une étoffe textile fabriquée en des micro-fibres (nappes ou tissus ou tricots).

9. Coussin d'essuyage selon l'une des revendications précédentes, caractérisée en ce que la housse (10) présente une fermeture et peut être échangée.

10. Coussin d'essuyage selon la revendication 9, caractérisé an ce que la fermeture est une fermeture éclair.

11. Coussin d'essuyage selon la revendication 9, caractérisé en ce que le fermeture est une fermeture éclair de surface.
